# EUROPEAN PATENT APPLICATION

(11) **EP 4 810 915 A1**
(43) Date of publication of application: **23.09.2026**
(21) Application number: 25164589.1
(22) Date of filing: 18.03.2025
(51) Int. Cl.: G01C 21/00, G06F 16/23, G06F 16/29

(54) **METHOD, APPARATUS AND COMPUTER PROGRAM FOR MANAGING MODIFICATIONS TO MAP DATA**

(71) Applicant: TomTom Global Content B.V., 1011 AC Amsterdam (NL)
(72) Inventor: Kosla, Pawel, 1011 AC Amsterdam (NL); Chrominski, Bartosz, 1011 AC Amsterdam (NL); Myczkowski, Maciej, 1011 AC Amsterdam (NL); Stankiewicz, Michal, 1011 AC Amsterdam (NL); Wojtas, Damian, 1011 AC Amsterdam (NL); Zaczynski, Leszek, 1011 AC Amsterdam (NL)
(74) Representative: Swindell & Pearson Limited

(57) **Abstract**

Certain examples provide a computer-implemented method (100) for managing modifications to map data of a digital map, the method comprising: receiving (101), at a first apparatus (201) from a second apparatus (202), a first map data modification (D301_1); determining (102) whether the first map data modification is associated with a set (302) of one or more map data modifications (D301_n) stored in a database (201 DB) of the first apparatus or accessible by the first apparatus, the set (302) of one or more map data modifications (D301_n) having a timer period (303QT) assigned thereto, wherein the timer period represents an amount of time until the one or more map data modifications of the set is to be sent to a third apparatus (203); in response to determining that the first map data modification is associated with the set: adding (103) the first map data modification to the set to form a modified set (302'), and modifying (104) the timer period to form a modified timer period (303QT') assigned to the modified set; determining (105) whether the modified timer period assigned to the modified set has expired, in response to determining that the modified timer period assigned to the modified set has expired, sending (106) the map data modifications (D301_n') of the modified set to the third apparatus (203).

## Description

### TECHNOLOGICAL FIELD

Examples of the disclosure relate to methods, apparatuses and computer programs for managing modifications to map data of a digital map.

### BACKGROUND

Spatial databases (which may also be known as a geospatial databases) are a type of database designed to store, query, and manage data that represents objects in a geometric space. Such a database may be referred to as a digital map (or an electronic map) and data stored therein, which represents map objects/features, may be referred to as map data. By way of an example, a digital map may comprise map data representative of map features, not least such as navigable elements of a network of navigable elements in a geographical region (wherein such navigable elements may correspond to, for example, one or more of: roads, foot paths, hiking trails, cycle paths, canals, tow paths, rivers, railway lines, or the like).

Digital maps may be used for navigation, route calculation and/or route guidance, not least by navigation devices. Navigation devices are computing devices (not least such as: in-car navigation systems, other vehicle navigation systems, portable navigation devices, or smart phones) that include localization means (not least such as GNSS signal reception and processing functionality for positioning/determining a location of the device) and an input/output interface. Such devices may have the capability to determine one or more: "fixes", "raw" GNSS fixes or "enhanced" fixes - each fix being a time-stamped geo-position.

A digital map may comprise map data representative of plural map layers. A primary/base layer of a digital map may represent primary level elements of the digital map. Such primary level elements are elements of the digital map that can be referenced directly, e.g. via higher level elements. The primary level elements may represent a physical geometry and topology of a network of navigable elements, such as a network of road segments (i.e. a stretch of road between two road junctions). A network of roads may be represented via a graph of nodes and arcs. In this regard, a road segment may be represented/defined in the primary layer by two nodes and an arc therebetween. This formalism will be used throughout the specification; however, the underlying principles can be applied even if another formalism were to be used.

The primary layer may serve as a base/reference layer for other/higher map layers. The primary layer may serve as a reference layer that can be used by (downstream) producers of map content/higher layer map data (e.g. producers of Value Add(ed) Data, VAD, for a VAD layer of a digital map). The higher layers may comprise attributes and associations of the attributes to particular map features (such map features themselves being defined/represented in the reference/base layer). For instance, a higher map layer may represent secondary level elements, i.e. elements of the digital map that can only be referenced in the context of their related primary element (e.g. an attribute of a road segment, not least such as a speed limit for the road segment).

A state of map data for a digital map may be considered as comprising all primary level elements and all secondary/higher level elements relevant for a particular spatial scope of the state (e.g. geographic extent/area that the state of map data represents). A state of map data may also be considered as corresponding to all elements of a certain layer.

A digital map may be dynamically and frequently modified/edited/updated to reflect changes in its map data (i.e. updates to map data representative of, not least for example: geographical features, infrastructure, map feature attributes and other relevant information). Map data modifications may comprise: creation, modification, or deletion of map data. Each modification, edit or update may result in a new/updated state of the digital map. A map data modification (which may be referred to herein as a map edit, a map change or a map update) may be considered to be information about a difference between two states (X and Y) of a digital map, such as an indication of one or more modifications to the map data which are necessary to update state X to state Y.

Some digital maps use a community-based data source, e.g. crowd-sourced map data. In this regard, such digital maps may be updated/maintained by a community of users (wherein "user", throughout this description, need not necessarily refer to a human user, but may also be interpreted as referring to a service or automation component) providing community driven content or contributions - wherein such content or contributions may comprise map data modifications. One example of a community-based digital map, where community-based map updates may be provided by a community of users, is OpenStreetMap Foundation's OpenStreetMap, OSM.

An issue faced by crowd-sourced/community sourced digital maps, whose map data and map data modifications may be driven by community of users, is that errors may be introduced, either accidentally/mistakenly or as part of deliberate vandalism. As a result of this, the updated/modified map data does not then correctly represent a digitized reality. In this regard, a map feature that had been updated/modified by an erroneous map data modification may not correctly/accurately reflect the physical world feature that it is intended to represent. Such erroneous map data modifications may be referred to herein as 'harmful map edits'. By way of an example, harmful map edits may include: removing neighbourhoods, changing islands to buildings, using profanities, creating roads in the middle of the ocean, drawing buildings obscenely shaped and the like.

Conventional management of modifications to map data is not always optimal.

In some circumstances it can be desirable to improve the management of modifications to map data. In some examples it can be desirable to provide an improved method for managing community sourced/driven map data modifications. In some examples it can be desirable to take advantage of crowd-sourced map production while reducing or limiting harmful map edits and/or mitigating the effect of harmful map edits.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided a computer-implemented method for managing map data, the method comprising:
receiving, at a first apparatus from a second apparatus, a first map data modification;
determining whether the first map data modification is associated with a set of one or more map data modifications stored in a database of the first apparatus or
accessible by the first apparatus, the set of one or more map data modifications having a timer period assigned thereto, wherein the timer period represents an amount of time until the one or more map data modifications of the set is to be sent to a third apparatus;
in response to determining that the first map data modification is associated with the set:
   adding the first map data modification to the set to form a modified set, and modifying the timer period to form a modified timer period assigned to the modified set;
determining whether the modified timer period assigned to the modified set has expired; and
in response to determining that the modified timer period assigned to the modified set has expired, sending the map data modifications of the modified set to the third apparatus.

According to various, but not necessarily all, examples of the disclosure there is provided an apparatus comprising means for performing the above-mentioned method.

According to various, but not necessarily all, examples of the disclosure there is provided at least one module, circuitry, processing circuitry, chipset, data processing apparatus, computer, device and/or system comprising means configured to perform the above-mentioned method.

According to various, but not necessarily all, examples of the disclosure there is provided a computer program comprising instructions, which when executed by an apparatus, cause the apparatus to perform the above-mentioned method.

According to various, but not necessarily all, examples of the disclosure there is provided an apparatus comprising:
at least one processor; and
at least one memory storing instructions that, when executed by the at least one processor, cause the apparatus at least to perform the above-mentioned method.

According to various, but not necessarily all, examples of the disclosure there is provided a non-transitory computer readable medium encoded with instructions that, when executed by at least one processor, causes at least the above-mentioned method to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, each map data modification is at least one of:
indicative of a modification to a map feature represented in a digital map;
indicative of a modification to an element of a digital map
indicative of a modification to at least one of: a node, a way, a relation or a tag of a digital map;
a map data modification to a digital map which is updated and/or maintained by a community of users; or
a map data modification derived from a community driven source of map data.

In some but not necessarily all examples, determining whether the first map data modification is associated with the set comprises at least one of:
determining whether the first map data modification affects, or is affected by, any of the map data modifications of the set;
determining whether the first map data modification modifies an element of the digital map that is modified by any of the map data modifications of the set; and determining whether any of the map data modifications of the set modifies an element of the digital map that is modified by the first map data modification.

In some but not necessarily all examples, the first map data modification comprises information indicative of a modification to an element of a digital map; and wherein the method further comprises determining a first set of one or more elements of the digital map that at least one of:
are affected by the first map data modification,
are dependent on the element of the digital map, or
refer to the element of the digital map.

In some but not necessarily all examples, the set comprises information indicative of one or more modifications to one or more elements of a digital map, and wherein the set additionally comprises information indicative of a second set of one or more elements of the digital map that at least one of:
are affected by the one or more map data modifications,
are dependent on the one or more elements of the digital map, or refer to the one or more elements of the digital map.

In some but not necessarily all examples, determining whether the first map data modification is associated with the set comprises:
determining whether any elements of the first set of one or more elements are in the second set of one or more elements.

In some but not necessarily all examples, the method further comprises:
determining whether a number of map data modifications in the modified set exceeds a predetermined threshold; and
in response to determining that the number of map data modifications in the modified set exceeds the predetermined threshold, sending the map data modifications in the modified set to the third apparatus.

In some but not necessarily all examples, the method further comprises:
in response to determining that the first map data modification is not associated with the set:
storing, in the database, a second set comprising information indicative of:
   the first map data modification,
   the first set of one or more elements; and
assigning a second timer period to the second set.

In some but not necessarily all examples, the method further comprises:
determining whether the second timer period assigned to the second set has expired;
in response to determining that the second timer period assigned to the second set has expired, sending the map data modifications of the second set to the third apparatus.

In some but not necessarily all examples, the method further comprises:
removing the modified set from the database once the map data modifications of the modified set have been sent to the third apparatus.

In some but not necessarily all examples, the timer period is greater than a predetermined threshold.

In some but not necessarily all examples, the database comprises at least one data member, wherein the at least one data member comprises information indicative of:
at least one map data modification modifying at least one element of a digital map;
one or more elements of the digital map that:
   are affected by the at least one map data modification,
   are dependent on the at least one element of the digital map, or refer to the at least one element of the digital map; and
a timer period representative of an amount of time until the at least one map data modification of the data member is to be sent to the third apparatus.

In some but not necessarily all examples, the third apparatus comprises a database for storing map data, and wherein:
the database is a geospatial database;
the map data is sourced at least in part from community-driven contributions;
the map data is updated and/or maintained at least in part by a community of users; and
the map data comprises map data for a map layer of a digital map.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates an example of a method for managing modifications to map data of a digital map in accordance with an example of the subject matter described herein;
FIG. 2 schematically illustrates an example of a system for managing modifications to map data of a digital map in accordance with an example of the subject matter described herein;
FIG. 3 schematically illustrates another example of a system for managing modifications to map data of a digital map in accordance with an example of the subject matter described herein;
FIG. 4 schematically illustrates an example of map data;
FIG. 5 schematically illustrates a map data modification to the map data of FIG. 4;
FIG. 6 schematically illustrates a merging of the map data modification of FIG. 5 with a further map data modification;
FIG. 7 schematically illustrates an apparatus in accordance with an example of the subject matter described herein; and
FIG. 8 schematically illustrates a computer program in accordance with an example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the description and drawings, a reference number without a subscript (e.g. 123) can be used as a generic reference to a feature or class/set of features. A reference number with a subscript (e.g. 123_1) can be used as a specific reference, e.g. to differentiate different instances of a feature or class/set of features. A numerical type subscript index (e.g. 123_1) can be used to indicate a specific instance of a class/a member of a set; and a nonspecific instance of the class (member of the set) can be referenced using the reference number with a variable type subscript index (e.g. 123_i).

### DETAILED DESCRIPTION

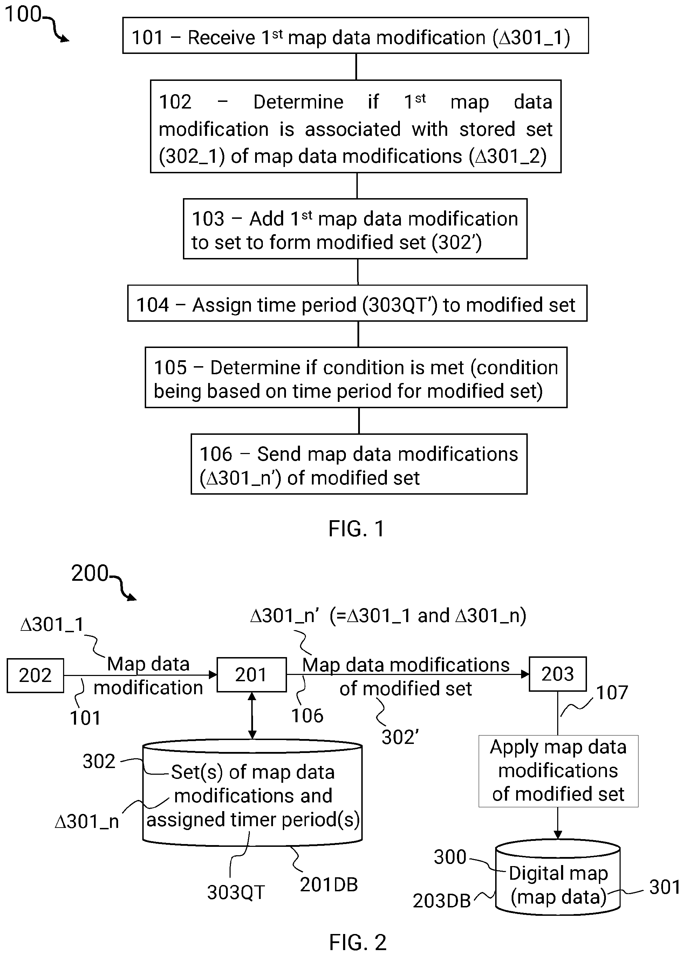

FIG. 1 schematically illustrates an example of a method 100 that provides a computer-implemented method of managing modifications to map data of a digital map.

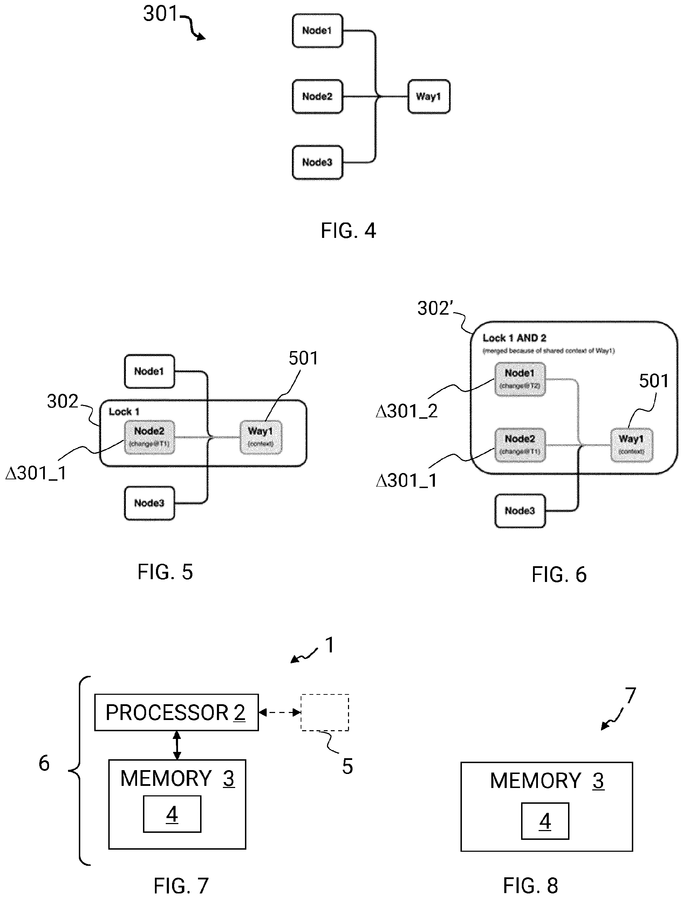

The component blocks of FIG. 1 are functional and the functions described can be performed by a first apparatus 201 (an example of an apparatus 1 that is suitable for performing the method 100 is described with reference to FIG. 7). The functions described can also be implemented via a computer program (such as computer program 4 as described with reference to FIG. 8).

One or more of the features discussed in relation to FIG. 1 can be found in one or more of the other FIGs (not least FIGs. 2 to 6). Accordingly, during the discussion of FIG. 1, reference will be made to FIGs. 2 to 6 and the features and reference numerals shown therein.

FIG. 2 schematically illustrates an example of a system 200 in which the method 100 may be performed. The system 200 comprises:
a first apparatus 201, which carries out the steps of method 100 of FIG.1;
a second apparatus 202, which map data modifications Δ301 are received from by the first apparatus;
a third apparatus 203, which map data modifications Δ301 are sent to by the first apparatus.

The first apparatus 201 may be embodied as a first device such as a first server device/entity. The first device may correspond to an entity that provides the management of map data modifications. As will be discussed below, the first apparatus provides a quarantine functionality, with a dynamically variable quarantine duration, for map data modifications Δ301 (that it receives from the second apparatus 202). In this regard, the first apparatus hosts, or has access to, a database 201DB (which may be referred to as a "quarantine database"). The database 201 DB stores one or more sets 302 of one or more map data modifications Δ301_n, wherein each set is associated with a respective timer period 303QT. The timer period for a given set represents an amount of time (which may be referred to as a "quarantine duration") remaining until the one or more map data modifications Δ301_n of the given set 302 are to be "released from quarantine", namely sent to the third apparatus 203 to be applied to map data 301 of a digital map 300. The map data 301 of a digital map 300 is stored in a database 203DB (which may be referred to as a "map database") that is hosted by, or accessible to, the third apparatus.

Each set 300 of map data modifications Δ301_n that is stored in the database 201 DB, along with its associated timer period 303QT, may be referred to as a "lock".

The map data 301 (which is the subject of modifications by the map data modifications Δ301) may comprise, not least for example:
one or more map elements (e.g. nodes, ways or relations); and/or one or more tags or attributes that are attached to/associated with the one or more map elements.

The digital map 300 may comprise at least one of:
community-based source of map data and/or map data modifications (e.g. crowd-sourced map data and map data modifications);
a digital map that is updated/maintained (directly or indirectly) by a community of users (wherein "user" need not necessarily refer to a human user, but may also be interpreted as referring to a service or automation component) providing community driven content or contributions not least such as map data modifications;
a digital map that is maintained/build in incremental way;
a digital map where a community of users/editors directly or indirectly validate the digital map's map data (in this regard, the community may be at least partly responsible for producing/managing/updating map data - which may enable community-driven identification and correction of erroneous map data, i.e. community-driven "self-healing" of map data.

The second device 202 may correspond to an entity that is a source of community-driven map data modifications, for example an update server of a community-sourced digital map that sends out community-sourced data modifications. In some examples, the second device 202 may itself also host the community-sourced digital map (or its own version/copy thereof), though in other examples, the hosting of the community-sourced digital map is performed by a separated entity, e.g. a third apparatus 203 such as is shown in FIG. 2.

The third apparatus may correspond to an entity that hosts/has access to a database 203DB for storing the map data 301 of the digital map 300 (such as community-sourced digital map) that is to be the subject of the modifications by the map data modification Δ301. In this regard, the database 203DB may be a geospatial database, wherein the map data is sourced at least in part from community-driven contributions. In this regard, the map data may be updated and/or maintained (directly or indirectly) at least in part by a community of users. The map data may comprises map data for one or more map layers of a digital map.

The third apparatus may also apply/write the map data modifications, that it receives from the first apparatus.

Turning now to the method blocks of method 100:
In block 101, the first apparatus 201 receives a first map data modification Δ301_1 from the second device 202.

Each map data modification (which may also be referred to as a: map edit, map change or map update) may be at least one of:
indicative of a modification (which may include: creation, deletion and/or alteration) to map data 301 of the digital map 300, i.e. a modification that is to be applied to at least a portion of map data;
indicative of a modification to a map feature represented in the digital map (e.g. a physical world feature, or a virtual feature [e.g. virtual elements anchored in a physical space] of a digital map)
indicative of a modification to what the map content represents or how it organizes and/or stores the data necessary for that representation;
indicative of a modification to an element of a digital map (i.e. a modification to a map element such as a node, a way, a relation);
indicative of a modification to a tag or an attribute attached to, or associated with, one or more map elements;
indicative of a modification to at least one of: a node, a way, a relation or a tag of a digital map;
a map data modification to a digital map which is updated and/or maintained by a community of users;
a map data modification derived from a community driven source of map data;
indicative of a difference between two states (e.g. X and Y) of a digital map; and/or indicative of a modification which change a digital map's state, e.g. change map state X to map state Y).

The map elements, which may be modified by a map data modification, may comprise at least one or more:
nodes - each of which represents a specific point or geographic position;
ways - each of which comprising an ordered list of nodes. Each way may represent a linear map feature (e.g. road), or a boundary of an area (e.g. building footprint);
relations - each of which defined a relationship between two or more map elements, i.e. a relationship between: nodes, ways, and/or other relations (e.g. a bus route); and/or
OSM primitives.

In block 102,the first apparatus determines whether the first map data modification Δ301_1 is associated with a set 302 of one or more map data modifications Δ301_n that are stored in a database 201 DB of, or accessible to, the first apparatus.

The set 302 of one or more map data modifications Δ301_n has a timer period 303QT assigned thereto. The timer period represents an amount of time until the one or more map data modifications Δ301_n of the set 302 is to be sent to a third apparatus 203. The timer period, i.e. the timer period initially assigned, may be greater than a predetermined threshold (which may be referred to as a "minimum lock duration"). The inventors have determined that an optimal value of the threshold/minimum lock duration is between 16 to 24 hours.

The set 302 of map data modifications may effectively be considered to be a pre-existing quarantined set of map data modifications that is stored in a database (that is accessible to/stored at the first apparatus) of quarantined map data modifications that have yet to be released from quarantine, i.e. to be applied to the digital map. The quarantined map data modifications of the set have an associated timer period that gradually decreases and the quarantined map data modifications of the set are released once their timer period has run out/expired. The set 302 of one or more map data modifications Δ301_n may be referred to herein as a "lock". The timer period 303QT of a set may be referred to herein as a quarantine duration of the set. A timer that counts down the timer period may be referred to herein as a quarantine clock.

The determination of whether the first map data modification Δ301_1 is associated with the set 302 of map data modifications Δ301_n may comprise determining whether:
the first map data modification Δ301_1 affects, or is affected by, any of the map data modification Δ301_n of the set 302;
the first map data modification Δ301_1 modifies a map element that depends on/is dependent on any map elements that are themselves modified by one of the map data modifications Δ301_n of the set 302; and/or
any of the map data modifications of the set modifies an element of the digital map that is modified by the first map data modification.

With regards to the term "affects" as used herein in the present context, this can be defined as modifying a map feature (which is composed of, or represented by, more than one map element) by modifying one or more of those component map elements (such as changing a node that is used in the representation of a building, which changes the building's geometry); or modifying a map feature that another map feature relies on for its functionality or value (such as changing hospital grounds under a hospital building, or changing an entry point of a building, which technically are treated as separate but related features).

In some examples, the first map data modification may comprise information indicative of a modification to an element (not least for example a node, way or relation) of a digital map. In which case, the first apparatus may determine a first set of one or more elements of the digital map that at least one of:
are affected by the first map data modification,
are dependent on the element of the digital map, or
refer to the element of the digital map.

Such a first set of one or more elements associated with the first map data modification may be referred to herein a context (or "lock context") for the first map data modification. In this regard the above determining step effectively determines a context/lock context of the first map data modification.

In some examples, the set 302 comprises information indicative of one or more modifications to one or more elements of a digital map. Additionally, the set 302 may also comprise information indicative of a second set of one or more elements of the digital map that at least one of:
are affected by the one or more map data modifications,
are dependent on the one or more elements of the digital map, or
refer to the one or more elements of the digital map.

Such a second set of one or more elements associated with the set 302 may likewise be referred to as a context (or "lock context") for the set 302 (it being noted that the set 302 may be referred to as a lock, namely a pre-existing/quarantined lock stored in the quarantine database). The second set/lock 302 thereby comprises its lock context in addition to its map data modifications Δ301_n.

In some examples, the locks are stored in the database via a data member that comprises information indicative of:
map data modifications for modifying one or more elements of the digital map;
lock context, namely one or more elements of the digital map that:
   are affected by at least one of the map data modifications,
   are dependent on at least one element of the digital map, or refer to the at least one element of the digital map; and
a timer/quarantine duration for the lock, i.e. a timer period representative of an amount of time left until the map data modifications of the lock/data member are to be sent to the third apparatus.

The determination of whether the first map data modification is associated with the set 302 may comprise determining whether any elements of the first set of one or more elements are in the second set of one or more elements. In this regard the above determining step effectively determines whether a context/lock context of the first map data modification overlaps with (has one or more matching elements with) a lock context of the set/lock 302. Such a determination may be referred to as determining intersecting lock contexts (i.e. whether the lock context of the first map data modification Δ301_1 intersects with the lock context of the set/lock 302).

In block 103, in response to determining that the first map data modification Δ301_1 is associated with the set 302, the first apparatus adds the first map data modification to the set 302 to form a modified set 302' (i.e. a modified lock). In this regard, the modified set 302' comprises a plurality of map data modifications Δ301_n', wherein the map data modifications Δ301_n'comprises the map data modifications Δ301_n and the first map data modification Δ301_1.

In response to determining that the first map data modification Δ301_1 is not associated with the set 302 (or indeed is not associated with any other set stored in the database), the first apparatus may:
store, in the database, a new set comprising information indicative of:
   the first map data modification Δ301_1,
   the first set of one or more elements (i.e. the lock context for the first map data modification); and
assign a new timer period to the new set.

In this regard, a new set (which may be considered to be a new lock) is stored in the database (i.e. a quarantine database). The new lock comprises its lock context and a timer period (i.e. a quarantine duration) is assigned to the new lock. When the timer period/ quarantine duration for the new lock expires, the map data modifications (namely the first map data modification Δ301_1) of the new lock may be sent to the third apparatus 203. Once the map data modifications have been sent to the third apparatus. the lock is removed from the database (this may be referred to as "closing" the lock).

In block 104, the first apparatus modifies the timer period 303QT of the set 302 in order to form a modified timer period 303QT' that is then assigned to the modified set 302'. For instance, the modified timer period 303QT' for the modified set 302' may comprise an increase in the amount of time/duration of the timer period 303QT of the set 302. In this regard, in effect, when the set of map data modifications is augmented to include the first map data modification, the quarantine duration for the modified set is increased - thereby delating the release of the map data modifications of the modified set. In some examples the timer may be increased by: 10 to 35 hours, 15 to 30, or 20-25 hours. In examples, the modified timer period 303QT' can be set to the original value of the initial timer period, and thus the modification of the timer may represent a "reset" of the clock.

Such modification of the timer period 303QT' for a modified set 302' may enable a dynamic increases in the quarantine duration for the set when the first map data modification is added to the set 302. Advantageously, this may bide additional time for a follow-up map data modification to be received, e.g. in a repeat/another iteration of step 101, that could be merged/added to the modified set 302'. In the event that the first map data modification was erroneous (e.g. accidently/mistakenly or deliberately contained an error - i.e. of the first map data modification was a "harmful map edit"), then delaying the release of the modified set 302' (which includes such a first map data modification/harmful map edit) may bide time for a follow-up/corrective map data modification to be received, e.g. in a repeat/another iteration of step 101. In effect, the modification of the timer period 303QT' for a modified set 302' provides time for "community self-healing".

Following the assignment of the modified timer period 303QT' (e.g. which was modified so as to be greater than the amount of time that was left on the initial timer period 303QT' for the set), the modified timer period 303QT' runs (i.e. counts down/gradually depletes).

In block 105, the first apparatus determines whether the modified timer period 303QT' assigned to the modified set 303' has expired. In this regard, a timer/quarantine clock may be used to determine an amount of time that has elapsed since the performance of any of blocks 101 to 104, and determine when the elapsed amount of time equals the initially set modified timer period 303QT'.

In block 106, in response to determining that the modified timer period assigned to the modified set 303' has expired, the first apparatus send the map data modifications Δ301_n' of the modified set 303' to the third apparatus 203. In this regard, the map data modifications Δ301_n' of the modified set can be considered to be released from quarantine such that the map data modifications can then be applied/written to a database of map data/a digital map to update the same.

Prior to sending the map data modifications Δ301_n' of the modified set 303' to the third apparatus 203, the first apparatus may squash the map data modifications Δ301_n', such that sending of the map data modifications of the modified set comprises sending the squashed map data modifications. For instance, if the map data modifications include the creation of a map element with an attribute set to a certain (erroneous) value A, and a subsequent modification includes the value of this attribute being changed to B, the squashed map data modifications may include the creation of the map element with the attribute set to value B.

Once the map data modifications of the modified set have been sent to the third apparatus, the modified set may be removed from the database. This may be referred to as "closing" the lock.

In some examples, following on from block 103, the apparatus determines whether a number of map data modifications in the modified set exceeds a predetermined threshold. In response to determining that the number of map data modifications in the modified set exceeds the predetermined threshold, the apparatus may send the map data modifications in the modified set to the third apparatus. In effect, this bypasses (or may bypass) steps 104 and 105 and prevents the modified set getting too big (having too many map data modifications therein) and repeatedly having more and more map data modifications added thereto and repeatedly having its modified timer period extended (which may excessively delay the release of the map data modifications). Once the map data modifications of the modified set have been sent to the third apparatus, the modified set may be removed from the database, i.e. the modified set/lock may be "closed".

In block 107 (not shown in FIG. 1 but indicated in FIG. 2), the third apparatus 203, upon receipt of the map data modifications Δ301_n' of the modified set 303' (or the squashed versions thereof) applies/writes the same to the map data 301 of the digital map 300 of the database 203DB so as to update the map data/digital map.

FIG. 1 schematically illustrates, and the above description describes, a method for managing modifications to map with reference to a received/incoming first map data modification. As will be readily appreciated, each received/incoming map data modification can be managed in a similar way.

There now follows a discussion of an example of the subject matter of the present disclosure, namely an example quarantine mechanism that limits a number of harmful edits consumed from community-based data source of community map edits. In this discussion, similar reference numerals to those used in FIGs. 1 and 2 will be used to aid comprehension.

In the following discussion, the following terminology may be used:

| **Used terminology or abbreviations** | **Meaning** | |
|---|---|---|
| Harmful map edits | Map edits that do not represent digitized reality, regardless of whether this is done intentionally (i.e. vandalism) or by mistake. | |
| | Examples include: removing neighborhoods, changing islands to buildings, using profanities, creating roads in the middle of the ocean, drawing buildings obscenely shaped. | |
| Community map data consumer | System consuming infinite stream of map data modifications from a community driven map data source. | |
| Data modification | Creation, modification, or deletion of a data entry. | |
| Increment | A list of map edits/map data modifications. This may correspond to a set of map edits, such as all map edits received in a particular time interval/update window. | |
| Quarantine Clock | Quarantine operates on the notion of time to stop modifications, i.e. delay the release/application/writing of modifications/map edits. This notion of current date/time comes from a freshest timestamp of a currently consumed data source Increment. | |
| Quarantine Duration | The amount of time an Increment should be kept in quarantine before releasing. The Quarantine Duration is validated against a Quarantine Clock. | |
| Quarantine predicate | A condition defining if and how an Increment/set of data modifications should be quarantined. | |
| Lock | Lock is a list of map edits/map data modifications that should be released together. Lock is composed of: | |
| | | • map edits / map data modifications |
| | | • Lock Context |
| | | • Quarantine Duration |
| Lock Context | Lock Context is all information necessary to find map edits that are related to each other. It is composed of | |
| | | • modified data entities |
| | | • 'neighboring' data entities (i.e. within a threshold separation distance) that are relevant to the modifications. |
| Squashed | The process of squashing (i.e. merging map edits/ map data modifications and applying them in sequence to obtain a [single] net modification to be applied rather than applying a sequence of modifications) takes a list of map edits and removes redundant modifications. This optimizes the size of data needed to describe a list of modifications. | |

By way of a brief overview, a stream of community map edits Δ301 are released from a source of map data 202 (for instance, map edits for an OSM map may be released from an OSM update server - it being appreciated that there may also be a separate copy of the OSM map that the community of users can access and seek to make map edits thereto - which themselves would be released by the OSM map update server). The community map edits Δ301 received from the source of map data updates 202 and are held in quarantine (i.e. stored in sets 302 of map edits Δ301_n in the form of "locks" in a quarantine database 201 DB by the first apparatus 201) prior to being released from quarantine and being applied to map data 301 of a digital map 300 that is stored at a database 203DB (wherein the digital map 300 may be a separate copy of the OSM map that is accessible to the community of users mentioned above). Whilst in quarantine, any further/new map edits (including follow-up corrections/"community self-healing" map edits related to currently quarantined map edits) that are received can be merged/added to one or more currently quarantined map edits (i.e. a quarantined lock), and a quarantine timer associated with the modified lock is increased, thereby increasing the amount of time until the quarantined locks is released and advantageously, biding more time to receive "community self-healing" map edits that may correct any harmful map edits in a quarantined lock.

The quarantine mechanism may thereby limit a number of harmful edits consumed from community-based data source of community map edits by providing a dynamically variable delay (and consolidation) of map edits.

The quarantine mechanism advantageously leverages the fact that community driven content is constantly improving over time (i.e. self-healing). If someone were to make a bad change/a harmful edit - someone else will fix it at some point in time.

In the quarantine mechanism, all map edits coming from community-driven source are treated as potentially being harmful edits. This means that all map edits are withheld in Locks until the Quarantine Duration is over.

If, within the Quarantine Duration, a new map edit is received that is related to a map edit of a Lock Context of a Lock, the Lock is extended with new map edit and the (modified) Lock is kept under Quarantine with newly calculated/increased Quarantine Duration.

When the Lock finishes its Quarantine Duration, it is released/published as a single increment.

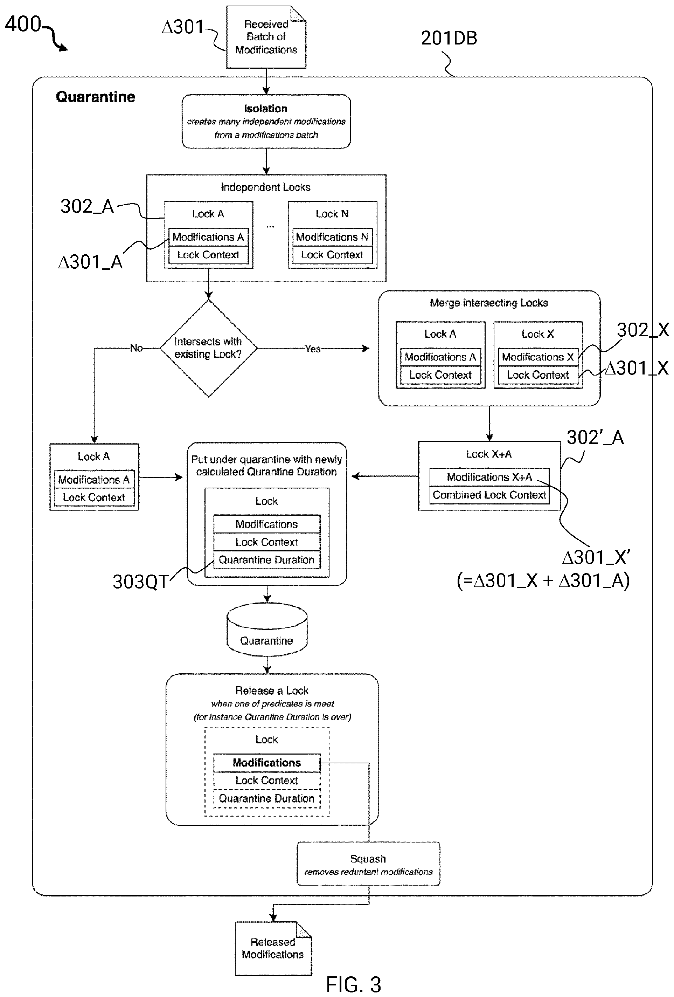

FIG. 3 schematically illustrates a quarantine mechanism 400 in accordance with an example of the present disclosure. The quarantine mechanism is described in context of OpenStreetMap data. However, it is to be appreciated that the core concept may be used for other community-driven content.

Incoming map changes Δ301, such as an incident Increment, are divided into independent sets 302 of modifications called Locks. A Lock/set of modifications can be considered to be independent of another Lock/set of modifications if their respective Lock Contexts do not intersect. The Locks are processed sequentially.

Each Lock contains a definition of a Lock Context. The Lock Context may be used to maintain data consistency.

Incoming map changes Δ301 are converted to Locks and intersected against already existing Locks (and their respective Lock Contexts), i.e. pre-existing Locks that are still in quarantine. If no existing Lock intersects them, then a new Lock is created. Conversely, if there is an intersection with at least one existing Lock, the new Lock merges with the at least one existing Lock (i.e. the map changes are appended to the list of modifications and Lock Contexts). (See FIG. 6 for an example of merging process).

The Lock Context for OSM data is based on the dependencies between model data objects, which may also be referred to as map elements. The model data objects/map elements are composed of: Nodes, Ways and Relations. A Way includes a list of Nodes. Relations consist of a list of Members, where a Member can be a Node or a Way or a Relation.

The model data object can be used to create a graph (typically a tree) that is a basis for the Lock Context.

Building the Lock Context is based on an idea of 'one up'. This means that:
1. If a Node is modified, (e.g. a Node's: position, attribute, tag or associated metadata is changes) then all the Ways/Relations that are referring to it are part of the Lock Context
2. If a Way is modified, then all the Relations that are referring to it are part of the Lock Context
3. If a Relation is modified, then all the Relations that are referring to it are part of the Lock Context

Locks can overgrow due to 'a snowball effect'. When a Lock's Context is relatively small, the likelihood of new modifications intersecting with it is relatively low. This would allow the Lock to be released after a minimum Quarantine Duration. However, when a Lock Context is larger, the probability of newly received modifications intersecting with the (larger) Lock Context increases. This may prevent its release due to the minimum Quarantine Duration never being met (since each time a new modification intersects with the Lock Context, the modification is added to the associated Lock and the Lock's Quarantine Duration is increased/extra time is added to the Lock's Quarantine Duration.

In order to address this issue, minimal required Context and a set of crafted predicates are used.

A Lock is released when any predicate mentioned below is satisfied. During this process, the Lock is closed and does not participate in intersection checks for building other Lock Contexts. Modifications in the Lock are Squashed and released from Quarantine.

Predicates:
Minimum Lock Duration (default Quarantine Duration)
   Minimum duration for which the lock is kept in quarantine since its creation. Determining the Duration value is described further below.
Trusted User
   When a modification is made by Trusted User, the modification may be immediately released from Quarantine. In some examples, all related quarantined modifications to the modification would also be released.
Maximum Lock Size
   A maximum size (measured in number of modifications) that a Lock can reach and still be kept in Quarantine. This is related to the above described 'snowball effect' - in some cases the Locks will grow to the point that may never be released. Therefore, to keep the system working (release any changes) when a Lock reaches a threshold number of modification, the modification are released.

FIGs. 4 to 6 schematically illustrate merging of intersecting Locks.

FIG. 4 schematically illustrates a portion of map data 301 (at time T0) comprising 3 Nodes and a Way.

In FIG. 5, following receipt of a map change at time T1 (in which a modification has been made to Node 2, a Lock 302 is formed. Lock 302 comprises the modification Δ301_1 and a Lock context 501, namely the Way which is related to the modified Node 2. A Quarantine Duration would be assigned to Lock 302.

In FIG. 6, following receipt of a further map change at time T2 (in which a modification has been made to Node 1, the Lock of FIG. 5 is modified to form a modified /merged Lock 302'. Lock 302' comprises the modifications Δ301_1 and Δ301_2, along with the Lock context 501. A revised/increased Quarantine Duration would be assigned to Lock 302'.

If incoming map changes Δ301 intersect with a plurality of existing Locks (and their Lock context), the modified/merged Lock 302' may comprise the modifications in all the intersecting Locks as well as the incoming map changes.

With regards to an optimum values of the Quarantine Duration, i.e. an optimal value of an initial/default Quarantine Duration as well as an optimum value of what the revised/modified Quarantine Duration should be reverted to, the inventors determined an optimal value based on studies of edits sourced from community-driven contributions to OpenStreetMap (OSM) and analysing the self-healing potential of OSM data. One study involved identifying OSM edits that could be deemed harmful to the map. It was observed that approximately 40% of these edits are marked as harmful within 20 hours of a changeset creation. Therefore, a quarantine period of 20 hours could mitigate 40% of such edits assuming that these are also fixed in a map in the similar time frame.

Following comprehensive analyses, the inventors have determined that implementing a quarantine period of approximately 16-24 hours would effectively prevent a significant percentage of harmful edits. This conclusion holds even without imposing additional predicates for quarantine, such as the type of edit, the user, or other factors.

Determining an optimal quarantine period is useful, since a lower percentage of harmful edits being mitigated would render the quarantine mechanism less viable. Each additional hour of quarantine comes with a cost, delaying the freshness of map edits. Therefore, the benefits of avoiding map problems must outweigh the cost of delayed updates. The analysis shows that a quarantine period within the 16-24 hour range strikes an optimal balance, ensuring the efficacy of the quarantine while maintaining reasonable edit freshness.

It will be understood that each block illustrated in FIG. 1, as well as the further functionality described above not least with respect to FIGs. 2 to 6, can be implemented by various means, such as hardware, firmware, and/or software including one or more computer program instructions. For example, one or more of the functions described above can be performed by a duly configured apparatus (such as an apparatus 1, as described with reference to FIG. 7, comprising means configured to perform the below described functionality). One or more of the functions/functionality can be embodied by a duly configured computer program (such as a computer program 4, as described with reference to FIG. 8, comprising computer program instructions which embody the functions/functionality described below and which can be stored by a memory storage device and performed by a processor).

The blocks and functionality illustrated in FIGs. 1 to 6 can represent actions in a method, functionality performed by an apparatus 1, and/or sections of instructions/code in a computer program 4.

The instructions/code in the computer program can be loaded onto a computer or other programmable apparatus (i.e. hardware) to produce a machine, such that the instructions when performed on the programmable apparatus create means configured to implement the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions configured to implement the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), represents one possible scenario among others. The order of the blocks/steps shown is not absolutely required, so in principle, the various blocks/steps can be performed out of order. Not all the blocks/steps are essential. In certain examples one or more blocks/steps can be performed in a different order or overlapping in time, in series or in parallel. One or more blocks/steps can be omitted or added or changed in some combination of ways.

It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps configured to implement the functions specified in the block or blocks.

Accordingly, the blocks support: combinations of means configured to perform the specified functions; combinations of actions configured to perform the specified functions; and computer program instructions/algorithm configured to perform the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide a method and/or a corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

FIG. 7 schematically illustrates a block diagram of an apparatus 1 configured to perform the methods, processes, and functionality described in the present disclosure and illustrated with respect to FIGs. 1 to 6. In this regard, in some examples, the apparatus can be embodied as a server. The component blocks of FIG. 1 to 6 are functional and the functions described can be performed by a single physical entity. The apparatus can be embodied by a computing device, not least such as those mentioned above. However, in some examples, the apparatus can be embodied as a chip, chip set, circuitry or module, i.e. for use in any of the foregoing.

The controller 6 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 6 can be as controller circuitry. The controller 6 can be implemented in hardware alone, have certain aspects in software including firmware alone or can be a combination of hardware and software (including firmware).

The controller 6 can be implemented using instructions that enable hardware functionality, for example, by using executable instructions of a computer program 4 in a general-purpose or special-purpose processor 2 that can be stored on a computer readable storage medium 3, for example memory, or disk etc, to be executed by such a processor 2.

The processor 2 is configured to read from and write to the memory 3. The processor 2 can also comprise an output interface via which data and/or commands are output by the processor 2 and an input interface via which data and/or commands are input to the processor 2. The apparatus can be coupled to or comprise one or more other components 5 (not least for example: a radio transceiver, sensors, input/output user interface elements and/or other modules/devices/components for inputting and outputting data/commands).

The memory 3 stores instructions such as a computer program 4 comprising such instructions (e.g. computer program instructions/code) that controls the operation of the apparatus 1 when loaded into the processor 2. The instructions of the computer program 4, provide the logic and routines that enables the apparatus to perform the methods, processes and procedures described in the present disclosure and illustrated in FIGs. 1 to 6. The processor 2 by reading the memory 3 is able to load and execute the computer program 4.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 3 is illustrated as a single component/circuitry it can be implemented as one or more separate components/circuitry some or all of which can be integrated/removable and/or can provide permanent/semi-permanent/ dynamic/cached storage.

Although the processor 2 is illustrated as a single component/circuitry it can be implemented as one or more separate components/circuitry some or all of which can be integrated/removable. The processor 2 can be a single core or multi-core processor.

The apparatus can include one or more components configured to effect the methods, processes and procedures described in the present disclosure and illustrated in FIGs. 1 to 6. It is contemplated that the functions of these components can be combined in one or more components or performed by other components of equivalent functionality. The description of a function should additionally be considered to also disclose any means suitable for performing that function.

Where a structural feature has been described, it can be replaced by means configured to perform one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

In some examples, the apparatus comprises:
at least one processor 2; and
at least one memory 3 storing instructions that, when executed by the at least one processor 2, cause the apparatus at least to perform the following:
   receiving, from a second apparatus, a first map data modification;
   determining whether the first map data modification is associated with a set of one or more map data modifications stored in a database of the apparatus or accessible by the apparatus, the set of one or more map data modifications having a timer period assigned thereto, wherein the timer period represents an amount of time until the one or more map data modifications of the set is to be sent to a third apparatus;
   in response to determining that the first map data modification is associated with the set:
      adding the first map data modification to the set to form a modified set, and
      modifying the timer period to form a modified timer period assigned to the modified set;
   determining whether the modified timer period assigned to the modified set has expired; and
   in response to determining that the modified timer period assigned to the modified set has expired, sending the map data modifications of the modified set to the third apparatus.

FIG. 8, illustrates a computer program 4 which may be conveyed via a delivery mechanism 7. The delivery mechanism 7 can be any suitable delivery mechanism, for example, a machine readable medium, a computer-readable medium, a non-transitory computer-readable storage medium, a computer program product, a memory device, a solid-state memory, a record medium or an article of manufacture that comprises or tangibly embodies the computer program 4. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform at least the following or configured to cause performing at least the following:
receiving, from a second apparatus, a first map data modification;
determining whether the first map data modification is associated with a set of one or more map data modifications stored in a database of the apparatus or accessible by the apparatus, the set of one or more map data modifications having a timer period assigned thereto, wherein the timer period represents an amount of time until the one or more map data modifications of the set is to be sent to a third apparatus;
in response to determining that the first map data modification is associated with the set:
   adding the first map data modification to the set to form a modified set, and
   modifying the timer period to form a modified timer period assigned to the modified set;
determining whether the modified timer period assigned to the modified set has expired; and
in response to determining that the modified timer period assigned to the modified set has expired, sending the map data modifications of the modified set to the third apparatus.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of receiving information should also be considered to disclose enabling, and/or causing, and/or controlling reception of information. Similarly, for example, a description of an apparatus receiving information should also be considered to disclose at least one means or controller of the apparatus enabling, and/or causing, and/or controlling the apparatus to receiving the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter, or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning.

In this description, references to the terms "first" and "second" or the like may be used to describe various elements, however these elements should not be limited by these terms. These terms are merely used to distinguish one element from another (unless the context clearly indicates the contrary). For example, a first element could be termed a second element, and likewise a second element could be termed a first element. If it is intended to use 'first' and "second" with an ordinal meaning (e.g. to ascribe an order of elements) then it will be made clear in the context.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "the at least one" and "the one or more" mean "any one of the at least one" and "any one of the one or more", respectively.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method for managing modifications to map data of a digital map, the method comprising:
receiving, at a first apparatus from a second apparatus, a first map data modification;
determining whether the first map data modification is associated with a set of one or more map data modifications stored in a database of the first apparatus or
accessible by the first apparatus, the set of one or more map data modifications having a timer period assigned thereto, wherein the timer period represents an amount of time until the one or more map data modifications of the set is to be sent to a third apparatus;
in response to determining that the first map data modification is associated with the set:
adding the first map data modification to the set to form a modified set, and
modifying the timer period to form a modified timer period assigned to the modified set;
determining whether the modified timer period assigned to the modified set has expired; and
in response to determining that the modified timer period assigned to the modified set has expired, sending the map data modifications of the modified set to the third apparatus.

2. The method of any previous claim, wherein each map data modification is at least one of:
indicative of a modification to a map feature represented in a digital map;
indicative of a modification to an element of a digital map
indicative of a modification to at least one of: a node, a way, a relation or a tag of a digital map;
a map data modification to a digital map which is updated and/or maintained by a community of users; or
a map data modification derived from a community driven source of map data.

3. The method of any previous claim, wherein determining whether the first map data modification is associated with the set comprises at least one of:
determining whether the first map data modification affects, or is affected by, any of the map data modifications of the set;
determining whether the first map data modification modifies an element of the digital map that is modified by any of the map data modifications of the set; and
determining whether any of the map data modifications of the set modifies an element of the digital map that is modified by the first map data modification.

4. The method of any previous claim, wherein the first map data modification comprises information indicative of a modification to an element of a digital map; and wherein the method further comprises determining a first set of one or more elements of the digital map that at least one of:
are affected by the first map data modification,
are dependent on the element of the digital map, or
refer to the element of the digital map.

5. The method of any previous claim, wherein the set comprises information indicative of one or more modifications to one or more elements of a digital map, and wherein the set additionally comprises information indicative of a second set of one or more elements of the digital map that at least one of:
are affected by the one or more map data modifications,
are dependent on the one or more elements of the digital map, or
refer to the one or more elements of the digital map.

6. The method of claim 5 when dependent upon claim 4, wherein determining whether the first map data modification is associated with the set comprises:
determining whether any elements of the first set of one or more elements are in the second set of one or more elements.

7. The method of any previous claim, further comprising:
determining whether a number of map data modifications in the modified set exceeds a predetermined threshold; and
in response to determining that the number of map data modifications in the modified set exceeds the predetermined threshold, sending the map data modifications in the modified set to the third apparatus.

8. The method of previous claim when dependent upon claim 4, further comprising:
in response to determining that the first map data modification is not associated with the set:
storing, in the database, a second set comprising information indicative of:
the first map data modification,
the first set of one or more elements; and
assigning a second timer period to the second set.

9. The method of claim 8, further comprising:
determining whether the second timer period assigned to the second set has expired;
in response to determining that the second timer period assigned to the second set has expired, sending the map data modifications of the second set to the third apparatus.

10. The method of any previous claim, further comprising:
removing the modified set from the database once the map data modifications of the modified set have been sent to the third apparatus.

11. The method of any previous claim, wherein the timer period is greater than a predetermined threshold.

12. The method of any previous claim, wherein the database comprises at least one data member, wherein the at least one data member comprises information indicative of:
at least one map data modification modifying at least one element of a digital map;
one or more elements of the digital map that:
are affected by the at least one map data modification,
are dependent on the at least one element of the digital map, or
refer to the at least one element of the digital map; and
a timer period representative of an amount of time until the at least one map data modification of the data member is to be sent to the third apparatus.

13. The method of any previous claim, wherein the third apparatus comprises a database for storing map data, and wherein:
the database is a geospatial database;
the map data is sourced at least in part from community-driven contributions;
the map data is updated and/or maintained at least in part by a community of users; and
the map data comprises map data for a map layer of a digital map.

14. An apparatus comprising means for performing the method of any of the previous claims.

15. A computer program comprising instructions which, when the program is executed by a computer, cause the computer to carry out the method of any of claims 1 to 13.
